# EUROPEAN PATENT APPLICATION

(11) **EP 4 675 189 A1**
(43) Date of publication of application: **07.01.2026**
(21) Application number: 24780633.4
(22) Date of filing: 28.03.2024
(51) Int. Cl.: F24F 11/54, F24F 11/58, H04L 67/02, H04L 67/12

(54) **COMMUNICATION METHOD, REFRIGERATION AIR-CONDITIONING RELATED SYSTEM, AND COMMUNICATION NODE**

(30) Priority: 31.03.2023 JP 2023058239
(71) Applicant: DAIKIN INDUSTRIES, LTD., Osaka-Shi, Osaka 530-0001 (JP)
(72) Inventor: MURAKAMI, Yuki, Osaka-shi, Osaka 530-0001 (JP); KATO, Toshiki, Osaka-shi, Osaka 530-0001 (JP); IURA, Tsutomu, Osaka-shi, Osaka 530-0001 (JP); TOKUDA, Mieharu, Osaka-shi, Osaka 530-0001 (JP)
(74) Representative: Goddar, Heinz J.
(86) International application number: PCT/JP2024/012625
(87) International publication number: WO 2024/204533

(57) **Abstract**

Provision of a communication method, a refrigerating-and-air-conditioning related system, and a communication node.

A communication method for communicating messages related to refrigerating-and-air-conditioning related units among a plurality of communication nodes, the communication method including allowing a first communication node to generate a message including data indicating values related to operations or states in the plurality of refrigerating-and-air-conditioning related units that vary from each other in type and a data tag indicating an attribute of the data and to transmit the generated message to a second communication node.

## Description

### [Technical Field]

The present invention relates to a communication method, a refrigerating-and-air-conditioning related system, and a communication node.

### [Background Art]

In a large-scale refrigerating-and-air-conditioning related system, for example, a network for communications is constructed by coupling a plurality of outdoor units to one centralized control device and coupling a plurality of indoor units to each of the outdoor units (for example, see Patent Literature 1). Pieces of data that vary from each other in type are transmitted and received among a plurality of devices including the centralized control device, the outdoor units, and the indoor units, and centralized control and cooperative operation, for example, of the devices are achieved.

### [Prior Art Document]

### [Patent Document]

[Patent Literature 1] Japanese Patent Laid-open Publication No. 2008-20092

### [Summary of Invention]

### [Problems to be Solved by Invention]

An object of the present disclosure is to provide a communication method, a refrigerating-and-air-conditioning related system, and a communication node that make it possible to achieve sharing of processes among different models.

### [Means for Solving Problems]

A communication method according to an aspect of the present disclosure relates to a communication method for communicating messages related to refrigerating-and-air-conditioning related units among a plurality of communication nodes, the communication method including allowing a first communication node to generate a message including data indicating values related to operations or states in the plurality of refrigerating-and-air-conditioning related units that vary from each other in type and a data tag indicating an attribute of the data and to transmit the generated message to a second communication node.

In the communication method according to the aspect of the present disclosure, the data tag is commonly used for the plurality of refrigerating-and-air-conditioning related units that vary from each other in type.

In the communication method according to the aspect of the present disclosure, each of the first communication node and the second communication node is any one of an indoor unit, an outdoor unit, a centralized control device, an air conditioner, a ventilator, a total heat exchanger, a refrigerating machine, and a chilling and refrigerating device.

In the communication method according to the aspect of the present disclosure, the data tag is defined independently for messages transmitted and received between the outdoor unit and the indoor unit and messages transmitted and received between the centralized control device and the indoor unit.

In the communication method according to the aspect of the present disclosure, the data tag is defined independently for refrigerant control and for centralized control of the plurality of refrigerating-and-air-conditioning related units.

In the communication method according to the aspect of the present disclosure, the second communication node is configured to not execute, when a data tag included in a received message is unknown, processing based on data associated with the data tag.

A refrigerating-and-air-conditioning related system according to one aspect of the present disclosure relates to a refrigerating-and-air-conditioning related system for communicating messages related to refrigerating-and-air-conditioning related units among a plurality of communication nodes, the refrigerating-and-air-conditioning related system including a first communication node including: a control unit; and a communication unit, in which the control unit generates a message including data indicating values related to operations or states in the plurality of refrigerating-and-air-conditioning related units that vary from each other in type and a data tag indicating an attribute of the data, and the communication unit transmits the generated message to a second communication node.

A communication node according to an aspect of the present disclosure relates to a communication node in a refrigerating-and-air-conditioning related system, the communication node including: a control unit; and a communication unit, in which the control unit generates a message including data indicating values related to operations or states in a plurality of refrigerating-and-air-conditioning related units that vary from each other in type and a data tag indicating an attribute of the data, and the communication unit transmits the generated message to another communication node.

### [Effects of Invention]

According to the present disclosure, it is possible to achieve sharing of processes among different models.

### [Brief Description of Drawings]

[Fig. 1] Fig. 1 is a schematic diagram illustrating a configuration example of a refrigerating-and-air-conditioning related system according to an embodiment.
[Fig. 2] Fig. 2 is a block diagram illustrating a configuration example of an outdoor unit.
[Fig. 3] Fig. 3 is a block diagram illustrating a configuration example of an indoor unit.
[Fig. 4] Fig. 4 is a block diagram illustrating a configuration example of a centralized control device.
[Fig. 5] Fig. 5 is a block diagram illustrating a configuration example of a relay device.
[Fig. 6] Fig. 6 is a conceptual diagram illustrating a format of a message (telegraphic message) transmitted and received among devices.
[Fig. 7] Fig. 7 is a schematic diagram illustrating an example of a message when a start or stop command is issued from the centralized control device to the indoor unit.
[Fig. 8] Fig. 8 is a schematic diagram illustrating an example of a message when the outdoor unit acquires information of a thermo ON state from the indoor unit.
[Fig. 9] Fig. 9 is a flowchart for describing a transmission procedure for a message.

### [Mode for Carrying out Invention]

A refrigerating-and-air-conditioning related system according to an embodiment will now be specifically described herein with reference to the accompanying drawings. Note that the present technique is not limited to these examples described below, but is indicated by the scope of Claims, and is intended to include all modifications falling within the meaning and scope equivalent to the scope of Claims.

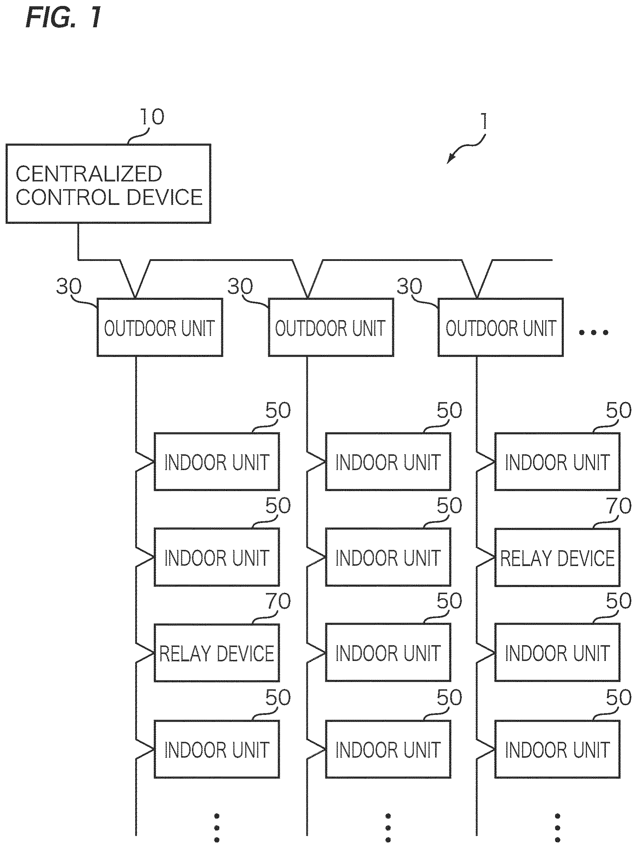

Fig. 1 is a schematic diagram illustrating a configuration example of a refrigerating-and-air-conditioning related system according to the embodiment. A refrigerating-and-air-conditioning related system 1 according to the embodiment is a system for transmitting and receiving messages related to refrigerating-and-air-conditioning related units among a plurality of communication nodes. A first communication node included in the refrigerating-and-air-conditioning related system 1 generates a message including data indicating values related to operations or states in the plurality of refrigerating-and-air-conditioning related units that vary from each other in type and a data tag indicating an attribute of the data and transmits the generated message to a second communication node.

The refrigerating-and-air-conditioning related units illustrated in Fig. 1 include a centralized control device 10, an outdoor unit 30, an indoor unit 50, and a relay device 70. The refrigerating-and-air-conditioning related units are not limited to include those described above, and may include an air conditioner, a ventilator, a total heat exchanger, a refrigerating machine, and a chilling and refrigerating device The refrigerating-and-air-conditioning related units may further include, for example, a service checker, a remote controller (or remo-con in short), a communication device, and a control device.

In the present embodiment, the communication nodes are the refrigerating-and-air-conditioning related units. Alternatively, the communication nodes may be communication devices respectively incorporated in the refrigerating-and-air-conditioning related units or coupled to external devices or may be communication devices provided within the refrigerating-and-air-conditioning related system 1 independently of the refrigerating-and-air-conditioning related units. In below description, the refrigerating-and-air-conditioning related units and the communication devices that function as communication nodes will also be simply referred to as devices.

In the refrigerating-and-air-conditioning related system 1 illustrated in Fig. 1, one centralized control device 10 and a plurality of the outdoor units 30 are coupled to each other via transmission lines. In the present embodiment, the plurality of devices are coupled to each other in a daisy-chain scheme. That is, a first outdoor unit 30 is coupled to the centralized control device 10 via a first transmission line, a second outdoor unit 30 is coupled to the first outdoor unit 30 via a second transmission line, and a third outdoor unit 30 is coupled to the second outdoor unit 30 via a third transmission line. Note herein that the plurality of transmission lines coupling the centralized control device 10 and the plurality of outdoor units 30 are electrically conductive with each other. Therefore, for example, it is possible to allow all the outdoor units 30 coupled in the daisy-chain scheme to receive messages that the centralized control device 10 transmits, and it is possible to allow the centralized control device 10 and all other ones of the outdoor units 30 to receive a message that any one of the outdoor units 30 transmits.

Furthermore, in the refrigerating-and-air-conditioning related system 1, a plurality of the indoor units 50 are coupled to each of the outdoor units 30 via transmission lines in a daisy-chain scheme. That is, a first indoor unit 50 is coupled to one of the outdoor units 30 via a first transmission line, and a second indoor unit 50 is coupled to the first indoor unit 50 via a second transmission line. The plurality of transmission lines coupling the outdoor unit 30 and the plurality of indoor units 50 are electrically conductive with each other, and it is possible to allow all other ones of the devices coupled in the daisy-chain scheme to receive a message that any one of the devices transmits.

In each of the outdoor units 30, a transmission line for performing communications with the centralized control device 10 and the other ones of the outdoor units 30 and a transmission line for performing communications with the indoor units 50 are coupled. In the present embodiment, the two transmission lines are electrically conductive with each other inside the outdoor unit 30. Therefore, for example, the centralized control device 10 is able to communicate with the indoor units 50 via the outdoor unit 30. Furthermore, the indoor units 50 coupled to the first outdoor unit 30 are able to communicate with the other ones of the indoor units 50 coupled to the second outdoor unit 30 via the first outdoor unit 30 and the second outdoor unit 30. Note that, in each of the outdoor units 30, the transmission lines for performing communications with the centralized control device 10 and the other ones of the outdoor units 30 may be electrically decoupled from the transmission line for performing communications with the indoor units 50.

Furthermore, the refrigerating-and-air-conditioning related system 1 may include the relay device 70. For example, when a distance between two devices that should be directly coupled to each other via a transmission line is long and a length of the transmission line exceeds a predetermined length, the relay device 70 is provided between the devices. The refrigerating-and-air-conditioning related system 1 illustrated in Fig. 1 is provided with two relay devices 70 each coupled between two of the indoor units 50, 50. That is, the relay device 70 is coupled to the first indoor unit 50 via a first transmission line, and the second indoor unit 50 is coupled to the relay device 70 via a second transmission line.

The relay device 70 may be provided at any position in the refrigerating-and-air-conditioning related system 1. For example, the relay device 70 may be provided between the centralized control device 10 and one of the outdoor units 30, between two of the outdoor units 30, 30, or between one of the outdoor units 30 and one of the indoor units 50. Furthermore, the relay device 70 may be provided between other various devices than the centralized control device 10, the outdoor units 30, and the indoor units 50. Note that it is not necessary to provide the relay devices 70, and the refrigerating-and-air-conditioning related system 1 may be constructed without including the relay devices 70.

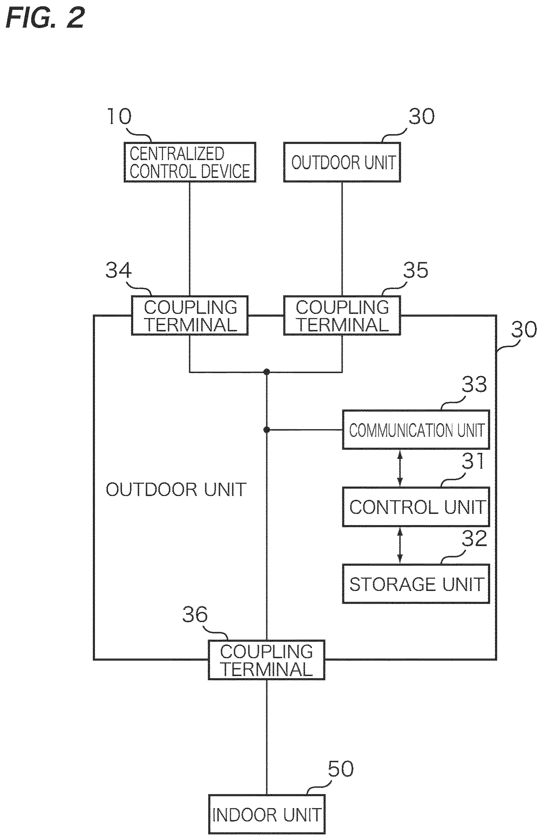

Fig. 2 is a block diagram illustrating a configuration example of the outdoor unit 30. The outdoor unit 30 includes, for example, a control unit 31, a storage unit 32, a communication unit 33, and coupling terminals 34 to 36. The control unit 31 includes, for example, an arithmetic processing device such as a microcomputer or a central processing unit (CPU). The control unit 31 reads and executes a program stored in the storage unit 32 to perform various types of processing. The control unit 31 performs various types of control processing including, for example, control of operations of the units of the outdoor unit 30 and control of communications with the centralized control device 10, the other ones of the outdoor units 30, and the indoor units 50. The control unit 31 includes, for example, a clock for outputting time information and a timer for measuring an elapsed period of time.

The storage unit 32 includes, for example, a non-volatile memory such as a flash memory or an electrically erasable programmable read only memory (EEPROM) and a volatile memory such as a dynamic random access memory (DRAM) or a static random access memory (SRAM). The storage unit 32 stores various types of programs that the control unit 31 executes and various types of pieces of information necessary for control processing of the control unit 31. The various types of programs are stored in the non-volatile memory. The various types of pieces of information may be stored only in the volatile memory or may be stored in the volatile memory and then copied and stored in the non-volatile memory.

The communication unit 33 includes, for example, a transceiver integrated circuit (IC). The communication unit 33 performs communications with the centralized control device 10, the other ones of the outdoor units 30, and the indoor units 50 via transmission lines coupled to the plurality of coupling terminals 34 to 36 provided in the outdoor unit 30. The communication unit 33 transmits and receives messages using, for example, an orthogonal frequency division multiplexing (OFDM) scheme. Specifically, the communication unit 33 utilizes a frequency band ranging from 2 MHz to 28 MHz inclusive to perform multi-carrier transmissions. The communication unit 33 acquires a message that should be transmitted from the control unit 31, converts the message into a modulation signal, and outputs the converted modulation signal onto the transmission lines to transmit the message. Furthermore, the communication unit 33 acquires a modulation signal on the transmission lines and demodulates the acquired modulation signal to receive a message. The received message is outputted to the control unit 31.

The three coupling terminals 34 to 36 respectively include electronic components such as couplers or sockets to which the transmission lines for communications are respectively detachably coupled. In the outdoor unit 30 according to the present embodiment, the three coupling terminals 34 to 36 are electrically conductive with each other via, for example, a wiring pattern on a circuit board and are electrically coupled to the communication unit 33. Therefore, a signal inputted from any one of the coupling terminals 34 to 36 is outputted from the coupling terminals 34 to 36 and is inputted to the communication unit 33. Furthermore, the signal that the communication unit 33 has outputted is outputted from the coupling terminals 34 to 36. Note that, although, in the present embodiment, the three coupling terminals 34 to 36 are directly electrically conductive with each other via the wiring pattern, for example, a filter circuit may be provided among the coupling terminals 34 to 36. A number of coupling terminals provided in the outdoor unit 30 may be equal to or less than two or equal to or greater than four.

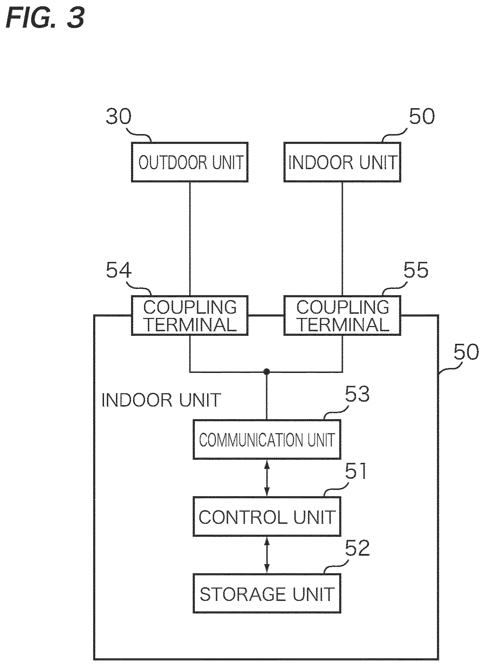

Fig. 3 is a block diagram illustrating a configuration example of the indoor unit 50. The indoor unit 50 includes a control unit 51, a storage unit 52, a communication unit 53, and two coupling terminals 54, 55. The control unit 51 includes an arithmetic processing device such as a microcomputer or a CPU. The control unit 51 performs various types of control processing including, for example, control of operations of the units of the indoor unit 50 and control of communications with the centralized control device 10, the outdoor unit 30, and the other ones of the indoor units 50. The control unit 51 includes, for example, a clock for outputting time information and a timer for measuring an elapsed period of time.

The storage unit 52 includes, for example, a non-volatile memory such as flash memory or an EEPROM and a volatile memory such as a DRAM or an SRAM. The storage unit 52 stores various types of programs that the control unit 51 executes and various types of pieces of information necessary for control processing of the control unit 51. The various types of programs are stored in the non-volatile memory. The various types of pieces of information may be stored only in the volatile memory or may be stored in the volatile memory and then copied and stored in the non-volatile memory.

The communication unit 53 includes, for example, a transceiver IC. The communication unit 53 has a function identical or similar to that of the communication unit 33 of the outdoor unit 30, for which an IC that is identical or similar in type to the IC used in the communication unit 33 of the outdoor unit 30 may be used. The communication unit 53 performs communications with the centralized control device 10, the outdoor units 30, and the other ones of the indoor units 50 via transmission lines coupled to the coupling terminals 54, 55 provided in the indoor unit 50. The communication unit 53 acquires a message that should be transmitted from the control unit 51, converts the message into a modulation signal, and outputs the converted modulation signal onto the transmission lines to transmit the message. Furthermore, the communication unit 53 acquires a modulation signal on the transmission lines and demodulates the modulation signal to receive a message. The received message is outputted to the control unit 51.

The two coupling terminals 54, 55 respectively include electronic components such as couplers or sockets to which the transmission lines for communications are respectively detachably coupled. The coupling terminals 54, 55 are electrically conductive with each other via, for example, a wiring pattern on a circuit board and are electrically coupled to the communication unit 53. A number of coupling terminals provided in the indoor unit 50 may be one or equal to or greater than three.

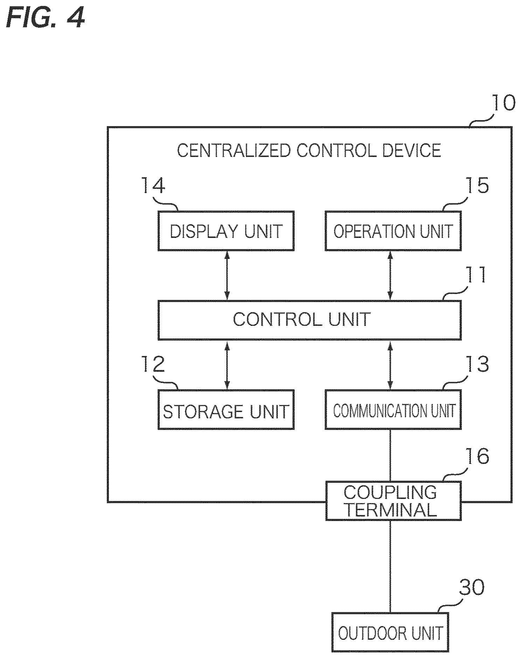

Fig. 4 is a block diagram illustrating a configuration example of the centralized control device 10. The centralized control device 10 includes, for example, a control unit 11, a storage unit 12, a communication unit 13, a display unit 14, an operation unit 15, and a coupling terminal 16. The control unit 11 includes an arithmetic processing device such as a CPU. The control unit 11 performs various types of control processing including, for example, control of operations of the units of the centralized control device 10 and control of communications with the outdoor units 30 and the indoor units 50. The control unit 11 includes, for example, a clock for outputting time information and a timer for measuring an elapsed period of time.

The storage unit 12 includes, for example, a non-volatile memory such as a flash memory or an EEPROM (or a magnetic storage device such as a hard disk) and a volatile memory such as a DRAM or an SRAM. The storage unit 12 stores various types of programs that the control unit 11 executes and various types of pieces of information necessary for control processing of the control unit 11. The various types of programs are stored in the non-volatile memory. The various types of pieces of information may be stored only in the volatile memory or may be stored in the volatile memory and then copied and stored in the non-volatile memory.

The communication unit 13 includes, for example, a transceiver IC. The communication unit 13 has a function identical or similar to those of the communication unit 33 of the outdoor unit 30 and the communication unit 53 of the indoor unit 50, for which an IC that is identical or similar in type to the ICs used in the communication unit 33 of the outdoor unit 30 and the communication unit 53 of the indoor unit 50 may be used. The communication unit 13 performs communications with the outdoor units 30 and the indoor units 50, for example, via transmission line coupled to the coupling terminal 16 provided in the centralized control device 10. The communication unit 13 acquires a message that should be transmitted from the control unit 11, converts the message into a modulation signal, and outputs the converted modulation signal onto the transmission lines to transmit the message. Furthermore, the communication unit 13 acquires a modulation signal on the transmission lines and demodulates the acquired modulation signal to receive a message. The received message is outputted to the control unit 11.

The display unit 14 includes, for example, a liquid crystal display and displays various types of images and text in accordance with control of the control unit 11. The operation unit 15 accepts an operation of a user and notifies the control unit 11 of the accepted operation. For example, the operation unit 15 accepts an operation of the user via an input device such as a mechanical button or a touch panel provided on a front face of the display unit 14. Furthermore, for example, the operation unit 15 may be input devices such as a mouse and a keyboard, and these input devices may be configured to be detachable from the centralized control device 10. The coupling terminal 16 includes, for example, an electronic component such as a coupler or a socket to which the transmission line for communications is detachably coupled. The coupling terminal 16 is electrically coupled to the communication unit 13 via, for example, a wiring pattern on a circuit board. A number of coupling terminals provided in the centralized control device 10 may be equal to or greater than two.

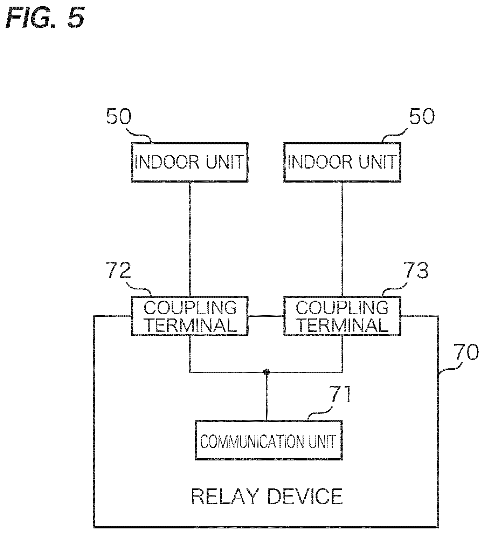

Fig. 5 is a block diagram illustrating a configuration example of the relay device 70. The relay device 70 according to the present embodiment includes, for example, a communication unit 71 and two coupling terminals 72, 73. The communication unit 71 includes, for example, a transceiver IC. The communication unit 71 has a function identical or similar to those of the communication unit 33 of the outdoor unit 30, the communication unit 53 of the indoor unit 50, and the communication unit 13 of the centralized control device 10, for which an IC that is identical or similar in type to the ICs used in these units may be used. The communication unit 71 performs communications with, for example, the centralized control device 10, the outdoor units 30, the indoor units 50 via transmission lines coupled to the coupling terminals 72, 73 provided in the relay device 70.

The two coupling terminals 72, 73 include, for example, electronic components such as couplers or sockets to which the transmission lines for communications are detachably coupled. The coupling terminals 72, 73 are electrically conductive with each other via, for example, a wiring pattern on a circuit board and are electrically coupled to the communication unit 71. A number of coupling terminals provided in the relay device 70 may be one or equal to or greater than three.

In the refrigerating-and-air-conditioning related system 1, the plurality of devices including, for example, the centralized control device 10, the outdoor units 30, the indoor units 50, and the relay devices 70 are coupled to each other in a daisy-chain scheme via the transmission lines, and perform multi-carrier communications based on an OFDM modulation scheme. The plurality of transmission lines coupling the plurality of devices are electrically conductive with each other, and it is possible to allow all the other ones of the devices to receive a message that one of the devices transmits.

Although, in the present embodiment, a coupling scheme for the devices is the daisy-chain scheme, the coupling scheme is not limited to the daisy-chain scheme, and another coupling scheme such as a bus scheme or a star scheme may also be applied.

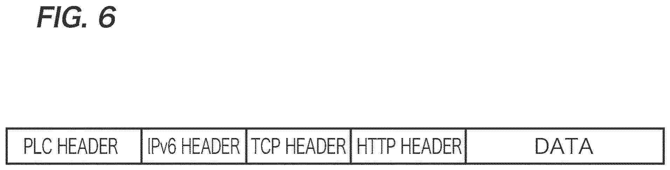

Fig. 6 is a conceptual diagram illustrating a format of a message (telegraphic message) transmitted and received among the devices. A communication protocol used in the refrigerating-and-air-conditioning related system 1 according to the embodiment is as follows. For a physical-data link layer, a PLC and an Ethernet (registered trademark) are used. For a network layer, IPv6 is used. For a transport layer, a user datagram protocol (UDP) and a transmission control protocol (TCP) are used. For an application layer, for example, representational state transfer application programming interface (REST API) using hypertext transport protocol (HTTP) is used.

For the refrigerating-and-air-conditioning related system 1, IPv6 is suitable. It is possible to use common-specification IP addresses to identify various types of devices coupled in a mutually usable manner for performing communications.

For the refrigerating-and-air-conditioning related system 1, UDP is suitable. Even when a large number of the indoor units 50 are coupled to each of the outdoor units 30, it does not cause a memory of the outdoor unit 30 to be strained because such connections as those based on TCP are to be established.

For the refrigerating-and-air-conditioning related system 1, REST API is suitable. Since binary-format messages are used, it is possible to perform communications with lower burdens than those when HTTP is used. It is possible to associate a request and a response with each other, making it possible to transmit again a message even when the request has been failed.

Messages transmitted and received among the devices are encoded in a key-value format such as JavaScript Object Notation (JSON), Messagepack, or Concise Binary Object Representation (CBOR). For the refrigerating-and-air-conditioning related system 1, a binary key-value format such as Messagepack or CBOR is suitable. It is possible to utilize Messagepack or CBOR, which is a binary format that provides a small encoding size, without causing the memory to be strained.

In the embodiment, when a message is transmitted from the first communication node to the second communication node, the first communication node that is a source of transmission generates a message including data indicating values related to operations or states in the plurality of refrigerating-and-air-conditioning related units that vary from each other in type and a data tag indicating an attribute of the data, and transmits the generated message to the second node that is a destination of the transmission.

In the present embodiment, the data tag is commonly used for the plurality of refrigerating-and-air-conditioning related units that vary from each other in type. However, when it is intended to achieve sharing of all data tags among all models, it may require a large period of time for studying definitions for the data tags. Therefore, data tags may be defined independently for messages transmitted and received among the outdoor units 30 and the indoor units 50 and messages transmitted and received among the centralized control device 10 and the indoor units 50. Furthermore, the data tags may be defined independently for each purpose, such as for refrigerant control or for centralized control of the plurality of refrigerating-and-air-conditioning related units.

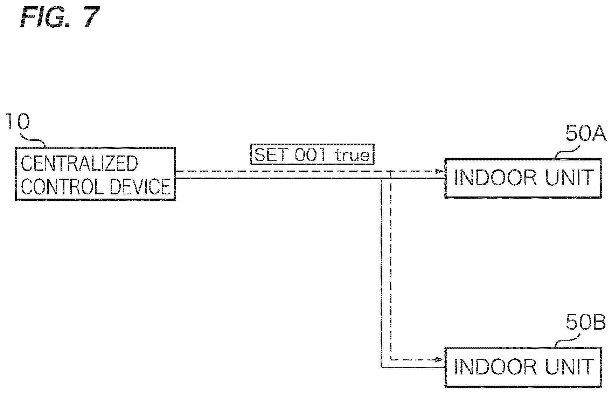

Fig. 7 is a schematic diagram illustrating an example of a message when a start or stop command is issued from the centralized control device 10 to the indoor units 50. In the example illustrated in Fig. 7, an indoor unit 50A is a ceiling cassette type indoor unit, and an indoor unit 50B is a wall-mounted type indoor unit. The indoor units 50A, 50B are examples of refrigerating-and-air-conditioning related units that vary from each other in model. The refrigerating-and-air-conditioning related units that are targets to which a start or stop command is issued from the centralized control device 10 are not limited to the indoor units 50A, 50B, and may be air conditioners, ventilators, total heat exchangers, refrigerating machines, and chilling and refrigerating devices, for example.

When the indoor units 50A, 50B are operated for starting or stopping from the centralized control device 10, the centralized control device 10 generates a message including a data tag indicating starting or stopping, a value, and a method, and transmits the generated message in a key-value format using REST API. In the example illustrated in Fig. 7, "001" is designated as the data tag indicating starting or stopping. Furthermore, "true (= run)" is designated as the value. When stopping is commanded, "false (= stop)" is designated as the value. In the method, "SET" is designated. The method "SET" represents an operation of updating data of a counterpart. Note that, in the present embodiment, the method "SET" is described in association with "POST" in REST API.

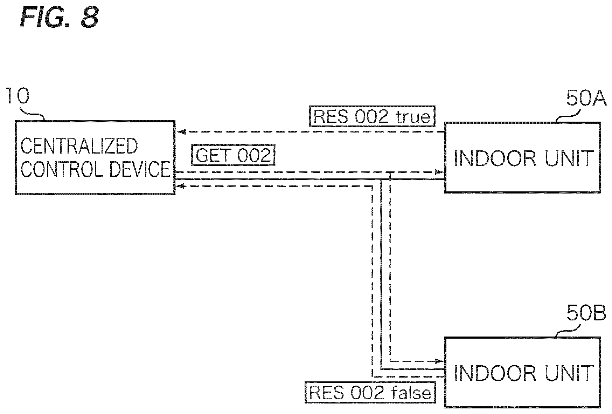

Fig. 8 is a schematic diagram illustrating an example of a message when the outdoor unit 30 acquires information of a thermo ON state from each of the indoor units 50. In the example illustrated in Fig. 8, the indoor unit 50A is a ceiling cassette type indoor unit, and the indoor unit 50B is a wall-mounted type indoor unit. The indoor units 50A, 50B are examples of refrigerating-and-air-conditioning related units that vary from each other in model.

As the outdoor unit 30 acquires information of the thermo ON state from each of the indoor units 50A, 50B, the outdoor unit 30 generates a message including a data tag indicating the thermo ON state and a method, and transmits the generated message in a key-value format using REST API. In the example illustrated in Fig. 8, "002" is designated as the data tag of the thermo ON state. The thermo ON state represents a state in which temperature control is performed while there is a deviation between a set temperature and a room temperature. As the method, "GET" is designated. The method "GET" represents an operation of acquiring data from the counterpart.

When the message described above is received, the indoor units 50A, 50B each generate a message including the data tag, the value, and the method described above and transmit the generated message in a key-value format using REST API. In the example illustrated in Fig. 8, "true" is designated as the value in the message from the indoor unit 50A, and "false" is designated as the value in the message from the indoor unit 50B. As the method, "RES" is designated. The method "RES" represents a response. Note that, in the present embodiment, the method "RES" is described in association with each "Response Code" in REST API. By replying the message described above as a response, the indoor unit 50A is able to notify the outdoor unit 30 of a state in which temperature control is performed while there is a deviation between the set temperature and the room temperature, and the indoor unit 50B is able to notify the outdoor unit 30 of a state in which temperature control is performed while there is no deviation between the set temperature and the room temperature.

Although the example in which different data tags are set for exchanging of data when the start or stop command is issued and exchanging of data when a request of acquiring the thermo ON state and its response are provided has been described with reference to Figs. 7 and 8, the data tags are not limited to the example, and exchanging of data in a desired process or a desired purpose (application) may be defined. For example, another data tag may be set for exchanging of data in refrigerant control from the outdoor unit 30 to each of the indoor units 50, and still another data tag may be set for exchanging of data in centralized control from the centralized control device 10 to each of the indoor units 50.

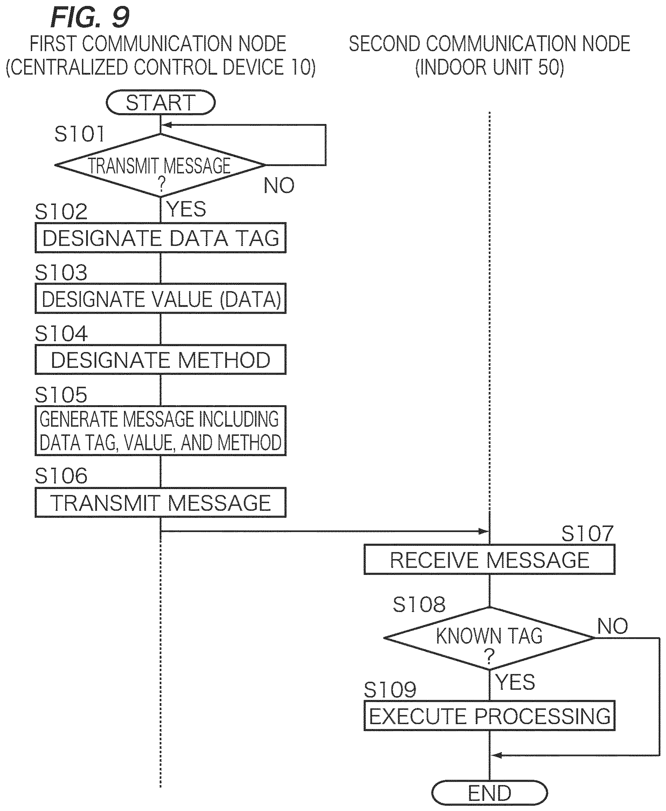

Fig. 9 is a flowchart for describing a transmission procedure for a message. Fig. 9 illustrates the transmission procedure when a message is transmitted from the first communication node to the second communication node. Although a case where the first communication node is the centralized control device 10 and the second communication node is the indoor unit 50 will now be specifically described herein in detail, the first communication node and the second communication node are not limited to the centralized control device 10 and the indoor unit 50, respectively. That is, each of the first communication node and the second communication node may be any one of the centralized control device 10, the outdoor unit 30, the indoor unit 50, an air conditioner, a ventilator, a total heat exchanger, a refrigerating machine, and a chilling and refrigerating device.

The control unit 11 of the centralized control device 10 determines whether or not to transmit a message to the indoor unit 50 (step S101). When a transmission command for a message is received via the operation unit 15, for example, the control unit 11 determines to transmit the message. Alternatively, the control unit 11 may determine to transmit a message when a certain event is detected. Furthermore, the control unit 11 may refer to outputs of the clock and the timer and determine to transmit a message when it is determined that a predetermined transmission timing has been reached. When it is determined that no message is to be transmitted (S101: NO), the control unit 11 waits until there is a timing for transmitting a message.

When it is determined to transmit a message (S101: YES), the control unit 11 designates a data tag (step S102). A data tag is set in accordance with a process or a purpose (application), and it is assumed that a mutual relationship has been stored in advance in the storage unit 12. The control unit 11 reads a corresponding data tag from the storage unit 12 in accordance with the process or the purpose (application), and designates the data tag as a data tag that should be included in a message. Specifically, the application to which the message is directed is designated by one of uniform resource identifiers (URIs) in REST API. For example, "/central_control" is designated for centralized monitoring, and "/refrigerant_control" is designated for refrigerant control. Since, in the present embodiment, a data tag is defined for each process or a purpose, for example, even when data tags each have an identical value of "1", the data tags may each represent set temperature information when URI is for centralized monitoring or may each represent an opening degree of an expansion valve when URI is for refrigerant control.

Next, the control unit 11 designates a value (step S103). The value is set in accordance with an operation or a state of each of the refrigerating-and-air-conditioning related units. For example, at step S102, when the control unit 11 designates a data tag for starting or stopping, "true (= run)" or "false (= stop)" is designated as the value. Note that the value is not necessarily designated, and may be designated as necessary.

Next, the control unit 11 designates a method (step S104). Definitions in REST API are diverted for the method, which include, for example, in addition to "SET", "GET", and "RES" described above, "INF" representing an operation of notifying a counterpart of its own data. At step S104, the control unit 11 describes the method in association with one of the definitions in REST API in accordance with the operation for the data. Specifically, the control unit 11 describes "SET" in association with "POST", "GET" in association with "GET", "INF" in association with "PUT", and "RES" in association with each "Response Code". Alternatively, the control unit 11 may associate "SET" with "PUT" and "INF" with "POST". Furthermore, the control unit 11 may regard an operation of notifying the counterpart of its own data as an operation of updating its own data that the counterpart holds and associate both "SET" and "INF" with "SET".

The control unit 11 generates a message including the designated data tag, the designated value, and the designated method (step S105). The control unit 11 causes the communication unit 13 to transmit the generated message in a key-value format to the destination, that is, the indoor unit 50 using REST API (step S106). Although, in the example illustrated in Fig. 9, one indoor unit 50 has been set as the destination, a plurality of the indoor units 50 may be set as the destinations, and a plurality of devices that vary from each other in type including the indoor units 50 may be set as the destinations. The message transmitted via the communication unit 13 reaches the destination, that is, the indoor unit 50, via the outdoor units 30 and other ones of the indoor units 50.

The communication unit 53 of the indoor unit 50 receives the message transmitted from the centralized control device 10 (step S107). The message that the communication unit 53 has received is outputted to the control unit 51.

The control unit 51 of the indoor unit 50 refers to the data tag included in the received message and determines whether or not the data tag has already been known or not (step S108). When it is determined that the data tag has been known (S108: YES), the control unit 51 executes a process that the message (the data tag, the value, and the method) has designated (step S109). The process that the message has designated includes a process of returning data, a process of causing the storage unit 52 to store data, and a process of updating data stored in the storage unit 52. When the control unit 51 executes the process of returning data, a message including a data tag, a value, and a method may be generated and the generated message may be transmitted to the centralized control device 10 in identical steps to steps S102 to S106.

At step S108, when it is determined that the data tag included in the received message is unknown (S108: NO), the control unit 51 executes no processes based on the data associated with the data tag but ends the processing according to the present flowchart.

In the present embodiment, which makes it possible to achieve sharing of processes including, for example, a process when a start or stop command is issued and a process of requesting acquisition of the thermo ON state and of replying its response regardless of a model using such a message as described above, it is possible to reduce development man-hours.

In a refrigerating-and-air-conditioning related system, for example, there may be a case where a new outdoor unit and an old indoor unit are coupled to each other. When there is a difference in product version between an outdoor unit and an indoor unit or when there is a difference in version between applications respectively installed in an outdoor unit and an indoor unit, the indoor unit may receive an unknown data tag from the outdoor unit. Conversely, the outdoor unit may receive an unknown data tag from the indoor unit. When the indoor unit or the outdoor unit replies a response about impossibility of processing when an unknown data tag is received, responses to SET and INF requests, which may be originally unnecessary, may be issued, possibly straining a communication bandwidth.

Since, when it is determined that a data tag included in a received message is unknown, no process based on data associated with the data tag is executed (the data tag is ignored), in the present embodiment, as described with reference to step S108 in the processing, it is possible to achieve compatibility between new and old components without increasing a communication bandwidth. Furthermore, since it is possible to eliminate a risk of performing an unintended operation when an unknown data tag has been received, it is possible to desirably set a data tag for a new process or a new purpose, making it possible to improve development efficiency.

Furthermore, since, in the present embodiment, it is possible to define a data tag independently for each purpose, such as for refrigerant control or for centralized control of a plurality of refrigerating-and-air-conditioning related units, studying of sharing of processes more than necessary is eliminated, reducing man-hours required for defining a data tag itself. When, for example, there has been a shift from conventional control performed using data including integers to control using data including numbers below a decimal point due to improvement in accuracy of data that an air conditioner (an indoor unit and an outdoor unit) handles, it is necessary to update an application. Even in such a case, defining a data tag for an air conditioner independently from a data tag for centralized control makes it possible to limit an influence range to only one for the air conditioner.

Furthermore, in the present embodiment, a tag of data desired to be acquired is transmitted, and its response is replied as a set of a data tag and a value. Furthermore, when data is to be set, a set of a data tag and a value is transmitted.

As a result, it is possible to request a device for data items at a necessary and sufficient frequency for each centralized control device or in accordance with an application activated when a refrigerating-and-air-conditioning related system is introduced to a customer. Furthermore, for a necessity of data at a high frequency in future expansion of functionality, it may be possible to achieve deployment in existing devices. Furthermore, by disclosing data that may be required for future necessities as an interface, it is possible to make future preparations without wasting a current bandwidth.

It is possible to combine those items described in the present embodiment with each other. Furthermore, it is possible to combine the independent claims and the dependent claims recited in Claims with each other in any mutual combinations regardless of a form of citation. Furthermore, although a form (multi-claim form) in which a claim citing two or more other claims is described is used in the scope of Claims, the claim form is not limited the form. A form that recites a multi-claim that cites at least one multi-claim (multi-multi-claim) may also be used.

### [Description of Reference Numerals]

- 1: refrigerating-and-air-conditioning related system
- 10: centralized control device
- 11: control unit
- 12: storage unit
- 13: communication unit
- 14: display unit
- 15: operation unit
- 16: coupling terminal
- 30: outdoor unit
- 31: control unit
- 32: storage unit
- 33: communication unit
- 34 to 36: coupling terminal
- 50: indoor unit
- 51: control unit
- 52: storage unit
- 53: communication unit
- 54 to 55: coupling terminal

## Claims

1. A communication method for communicating messages related to refrigerating-and-air-conditioning related units among a plurality of communication nodes, the communication method comprising allowing
a first communication node
to generate a message including data indicating values related to operations or states in the plurality of refrigerating-and-air-conditioning related units that vary from each other in type and a data tag indicating an attribute of the data and
to transmit the generated message to a second communication node.

2. The communication method according to claim 1, wherein the data tag is commonly used for the plurality of refrigerating-and-air-conditioning related units that vary from each other in type.

3. The communication method according to claim 1, wherein each of the first communication node and the second communication node is any one of an indoor unit, an outdoor unit, a centralized control device, an air conditioner, a ventilator, a total heat exchanger, a refrigerating machine, and a chilling and refrigerating device.

4. The communication method according to claim 3, wherein the data tag is defined independently for messages transmitted and received between the outdoor unit and the indoor unit and messages transmitted and received between the centralized control device and the indoor unit.

5. The communication method according to claim 3, wherein the data tag is defined independently for refrigerant control and for centralized control of the plurality of refrigerating-and-air-conditioning related units.

6. The communication method according to any one of claims 1 to 5, wherein the second communication node is configured to not execute, when a data tag included in a received message is unknown, processing based on data associated with the data tag.

7. A refrigerating-and-air-conditioning related system for communicating messages related to refrigerating-and-air-conditioning related units among a plurality of communication nodes, the refrigerating-and-air-conditioning related system comprising
a first communication node including:
a control unit; and
a communication unit,
wherein
the control unit generates a message including data indicating values related to operations or states in the plurality of refrigerating-and-air-conditioning related units that vary from each other in type and a data tag indicating an attribute of the data, and
the communication unit transmits the generated message to a second communication node.

8. A communication node in a refrigerating-and-air-conditioning related system, the communication node comprising:
a control unit; and
a communication unit,
wherein
the control unit generates a message including data indicating values related to operations or states in a plurality of refrigerating-and-air-conditioning related units that vary from each other in type and a data tag indicating an attribute of the data, and
the communication unit transmits the generated message to another communication node.
